# EUROPEAN PATENT APPLICATION

(11) **EP 4 335 597 A1**
(43) Date of publication of application: **13.03.2024**
(21) Application number: 23172673.8
(22) Date of filing: 10.05.2023
(51) Int. Cl.: B25J 5/00, B25J 11/00, B60L 53/16, B60L 53/30, B60L 53/31, B60L 53/35, B60L 53/60, H02J 7/00, A01D 34/00

(54) **ROBOTIC TOOL AND CHARGING STATION**

(30) Priority: 12.05.2022 US 202263341223 P
(71) Applicant: Techtronic Cordless GP, Anderson, SC 29621 (US)
(72) Inventor: LAI, Hok Sum Sam, kwai chung (HK); CHOI, Man Ho, kwai chung (HK); NG, Ho Lam, kwai chung (HK); LI, Shing Hin, kwai chung (HK)
(74) Representative: Zimmermann & Partner Patentanwälte mbB

(57) **Abstract**

A charging station for use with a robotic tool, the charging station including a first column defining a first column axis, a second column defining a second column axis. The charging station also including a first charging terminal pivotably coupled to the first column for rotation about the first column axis, where the first charging terminal includes at least one electrode, and a second charging terminal pivotably coupled to the second column for rotation about the second column axis, where the second charging terminal includes at least one electrode.

## Description

### CROSS-REFERENCE TO RELATED APPLICATION

This application claims priority to prior-filed, co-pending U.S. Provisional Patent Application No. 63/341,223 filed on May 12, 2022, the entire contents of which is hereby incorporated by reference.

### FIELD OF THE INVENTION

The embodiments described herein related to a robotic tool, and more specifically to a charging station for use with the robotic tool.

### BACKGROUND OF THE INVENTION

Robot tools are typically used with some form of charging station to allow the tool to recharge any internal batteries from time to time.

### SUMMARY

In one aspect, A charging station for use with a robotic tool, the charging station including a first column defining a first column axis, a second column defining a second column axis. The charging station also including a first charging terminal pivotably coupled to the first column for rotation about the first column axis, where the first charging terminal includes at least one electrode, and a second charging terminal pivotably coupled to the second column for rotation about the second column axis, where the second charging terminal includes at least one electrode.

Alternatively or additionally, in any combination, where at least one of the first charging terminal and the second charging terminal includes a plurality of horizontally stacked portions.

Alternatively or additionally, in any combination, where at least one of the first charging terminal and the second charging terminal includes a first portion forming a first surface, a second portion forming a second surface opposite the first surface, and a third portion positioned between the first portion and the second portion.

Alternatively or additionally, in any combination, where the first portion and the second portion are formed from a conductive material, and wherein the third portion is formed from an insulating material.

Alternatively or additionally, in any combination, where one of the first surface and the second surface forms a positive electrode and the other of the first surface and the second surface forms a ground electrode.

Alternatively or additionally, in any combination, where the at least one electrode of the first charging terminal has an opposite polarity of the at least one electrode of the second charging terminal.

Alternatively or additionally, in any combination, further including a controller, where the controller can change the polarity of the at least one electrode of the first charging terminal and the at least one electrode of the second charging terminal.

Alternatively or additionally, in any combination, where the robotic tool can access the charging station from a first direction and a second direction opposite of the first direction, where the controller changes the polarity based on whether the robotic tool accesses the charging station from the first direction or the second direction.

In another aspect, a robotic tool including a body having an outer surface, the body having a front end, a first side end extending from the front end, and a second side end extending from the front end opposite the first side end, one or more driven wheels coupled to the body, a working tool coupled to the body, a battery; and a positive charging plate. The positive charging plate including a first portion extending partially along the front end of the body, a second portion extending at least partially along the first side of the body, and a ground charging plate including a third portion extending partially along the front end of the body, and a fourth portion extending at least partially along the second side of the body.

Alternatively or additionally, in any combination, where the positive charging plate and the ground charging plate are substantially identical in size and shape.

Alternatively or additionally, in any combination, where the second portion of the positive charging plate has a greater surface area than the first portion of the positive charging plate.

Alternatively or additionally, in any combination, where the fourth portion of the ground charging plate has a greater surface area than the third portion of the ground charging plate.

Alternatively or additionally, in any combination, where the ground charging plate has a greater total surface area than the total surface area of the positive charging plate.

Alternatively or additionally, in any combination, where the working tool is a rotating blade.

In another aspect, a robotic tool kit, including a charging station including a first column defining a first column axis, and a first charging terminal pivotally coupled to the first column for rotation about the first column axis, where the first charging terminal extends radially outwardly from the first column to produce at least one electrode. The robotic kit also including a robotic tool including a body having an exterior surface, at least one driven wheel coupled to the body, a battery, and a first charging plate open to the exterior surface of the body, where the first charging plate is configured to contact and form an electrical connection with the at least one electrode.

Alternatively or additionally, in any combination, where the at least one electrode of the charging terminal is located over a first vertical height range from a support surface, and where the first charging plate is located over a second vertical height range from the support surface, and where the first vertical height range overlaps with the second vertical height range.

Alternatively or additionally, in any combination, where the charging terminal includes a front surface and a back surface, and wherein one of the front surface and the back surface forms the positive electrode and the other of the back surface and the front surface forms the ground electrode.

Alternatively or additionally, in any combination, further including a second charging plate coupled and open to the exterior surface of the body, a second column defining a second column axis, a second charging terminal pivotably coupled to the second column for rotation about the second column axis, where the second charging terminal extends radially outwardly from the second column to produce at least one electrode.

Alternatively or additionally, in any combination, where the first charging terminal and the second charging terminal are positioned a first distance from a support surface, where the first charging plate and the second charging plate are positioned a second distance from the support surface, and where the first distance is the same as the second distance.

Alternatively or additionally, in any combination, where the charging terminal can rotate about the first column axis in a first direction and a second direction.

### BRIEF DESCRIPTION OF THE DRAWINGS

FIG. 1 is a plan view of a robotic tool positioned within a cutting area encompassed by a barrier.
FIG. 2 is a side view of the tool of FIG. 1.
FIG. 3 is a top view of the tool of FIG. 1.
FIG. 4 is a top view of the tool of FIG. 1 approaching a charging station.
FIG. 5 is a top view of a tool of FIG. 1 illustrating the charging plates.
FIG. 6 is a top view of another embodiment of a tool.
FIG. 7 is a top view of the charging station of FIG 4.
FIG. 8 is top view of another embodiment of a charging station.
FIG. 9 is a top view of a first charging terminal of the charging station of FIG. 4.
FIG. 10 is a top view of a second charging terminal of the charging station of FIG. 4.
FIG. 11 is a top view of the tool of FIG. 1 docked to a charging station.
FIG. 12 is a top view of the charging station of FIG. 4 with approach envelopes included.
FIG. 12A is a top view of the charging station of FIG. 4 with boundary wires extending therefrom and boundary wire extension envelopes included.
FIGS. 13 - 15 illustrate a tool traveling toward a docking station using various approach vectors.
FIG. 16 is a top view of the tool of FIG. 1 approaching another embodiment of a charging station.
FIG. 17 is a top view of the tool of FIG. 1 approaching another embodiment of a charging station.
FIG. 18 is a side view of another embodiment of the tool of FIG. 1 approaching another embodiment of a charging station.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

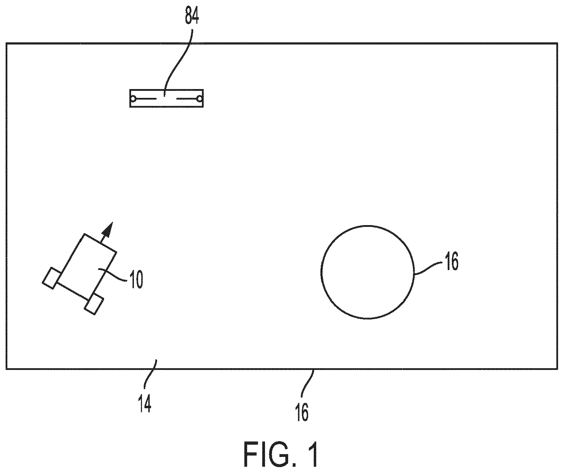

Figures 1-3 illustrate a robotic tool 10. More specifically, the tool 10 includes a robotic lawn mower for use to cut vegetation such as grass in an enclosed cutting area 14. The cutting area 14 generally includes, but is not limited to, a continuous area of grass or other vegetation that is enclosed by one or more barriers 16. In the illustrated embodiment, the barriers 16 include a series of electrified wires enclosing the cutting area 14 while in alternative embodiments different form of barrier may be used such as, but not limited to, walls, pavers, GPS data points, and the like. As shown in FIG. 1, such barriers 16 may be used to enclose the overall cutting area 14 and/or to segregate one or more interior regions from the cutting area 14. While the illustrated tool 10 is a robotic mower, it is understood that in alternative embodiments other forms of robotic tool may be used including, but not limited to, a robotic trimmer, a robotic sprinkler, a robotic fertilizer spreader, and the like.

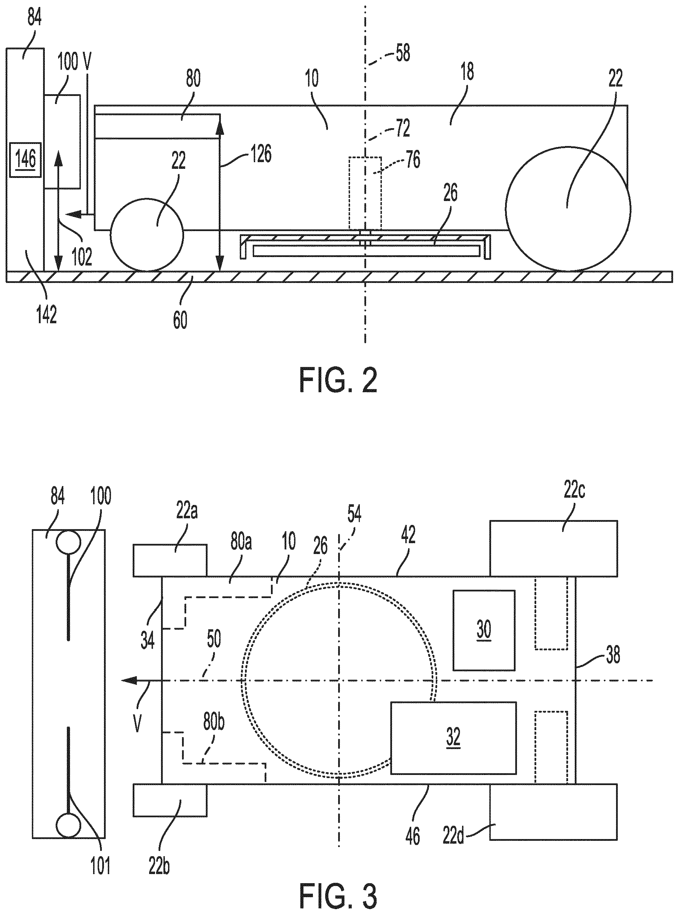

As shown in FIGS. 2 and 3, the tool 10 is an electrically powered, self-propelled device that includes a body 18, a plurality of wheels 22 rotatably mounted to the body 18, a working tool 26 mounted to the body 18, a controller 30, a battery 32, and a pair of charging plates 80a, 80b. The body 18, in turn, includes a front or first end 34, rear or second end 38 opposite the first end 34, a right or first side 42, and a left or second side 46 opposite the first side 42. The body 18 also defines a longitudinal axis 50 extending along the length of the body 18 and centered between the first side 42 and the second side 46 (e.g., passing through both the first and second ends 34, 38). The body 18 also defines a lateral axis 54 extending along the width of the body 18 and centered between the first and second ends 34, 38 (e.g., passing through both the first and second sides 42, 46). The body 18 also defines a central axis 58 generally positioned at the intersection of the longitudinal and lateral axes 50, 54 and oriented perpendicular to both (e.g., in a generally vertical orientation).

As shown in FIG. 3, the tool 10 includes four wheels 22a, 22b, 22c, 22d, each rotatably coupled to the body 18 and configured to support the tool 10 for self-driven movement along a support surface 60 (e.g., the surface of the cutting area 14). In the illustrated embodiment, the wheels 22a, 22b, 22c, 22d include two steerable, undriven wheels 22a, 22b and two non-steerable, driven wheels 22c, 22d. However, in alternative embodiments, all or any sub-set of the wheels 22 may be driven and all or any sub-set of the wheels 22 may be steerable. Furthermore, while the illustrated steerable wheels are passive in nature (e.g., a caster-style wheel), it is understood that in alternative embodiments the steerable wheels 22a, 22b may be actively driven by the controller 30. In still other embodiments, the tool 10 may include more or fewer wheels 22 positioned in different arrangements about the tool 10. In still other embodiments, the wheels 22 may be replaced by other forms of propulsion such as, but not limited to, tracks, omni-wheels, walking legs, and the like.

As shown in FIGS. 2 and 3, the working tool 26 includes a rotating blade mounted for relative rotation about a blade axis 72. More specifically, the blade 26 is mounted to a dedicated blade motor 76 which rotates the blade 26 during use. In the illustrated embodiment, the blade axis 72 is oriented vertically (e.g., parallel to the central axis 58) and positioned proximate the center of the body 18. In some embodiments, the blade axis 72 may be coincident with the central axis 58. While the illustrated working tool 26 is a rotating blade, it is understood that in alternative embodiments the tool 26 may include, but is not limited to, reciprocating blades, a distributor or dispenser of some kind, and the like.

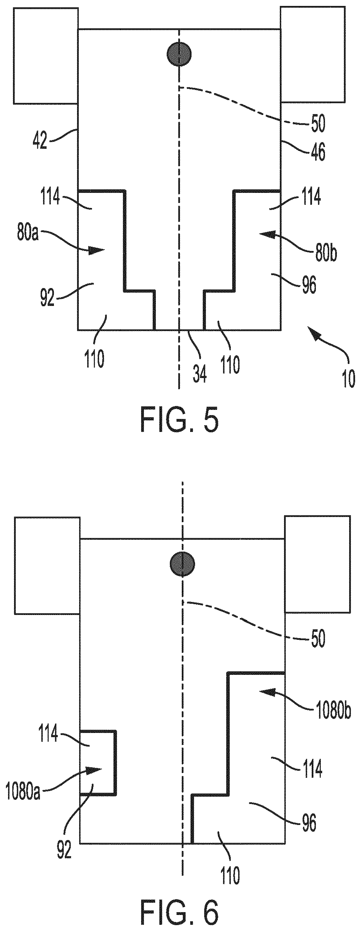

As shown in FIG. 5, the tool 10 also includes a pair of charging plates 80a, 80b accessible from the exterior of the body 18 and in operable communication with at least one of the controller 30 and the battery 32 of the tool 10. During use, the charging plates 80a, b are configured to create a temporary electrical connection with a charging station 84 (described below) to convey the electrical energy output by the charging station 84 to the battery 32 for recharging operations. More specifically, each charging plate 80a, 80b includes a piece of conductive material applied to or embedded in the exterior surface of the body 18 of the tool 10 to form a corresponding electrode 92, 96. During use, the charging plates 80a, 80b are positioned on the exterior of the body 18 so that a pair of charging terminals 100, 101 of the charging station 84 can contact the charging plates 80a, 80b as the tool 10 engages the charging station 84 and form the desired temporary electrical connection therebetween. Since only surface contact between the plates 80a, 80b and the charging station 84 is required, less precision is needed when docking the tool 10 with the charging station 84 as an exact lateral and vertical alignment is not required.

The pair of charging plates 80a, 80b include a first charging plate 80a and a second charging plate 80b. More specifically, the first charging plate 80a includes a first section 110 extending along a portion of the front end 34 of the body 18 and a second section 114 extending along a portion of the first side 42 of the body 18 to generally encompass the front-right corner of the body 18 (see FIG. 5). The second charging plate 80b includes a first section 110 extending along a portion of the front end 34 of the body 18 and a second section 114 extending along a portion of the second side 46 of the body 18 to generally encompass the front-left corner of the body 18. In another embodiment, one or both of the charging plates 80a, 80b may be disposed only on the front end 34 or only on the sides 42, 46 of the body 18 to alter the exact point at which the charging station 84 forms an electrical connection therewith. Furthermore, in some embodiments, the second section 114 of the first and second charging plates 80a, 80b may be larger in size than the first section 110 of the first and second charging plates 80a, 80b. The first and second sections 110, 114 may be continuous (e.g., the charging plates 80 encompass the corners) or the sections 110, 114 may be separated by a space. In still other embodiments, a single electrode may be embodied in multiple plates positioned along the body 18.

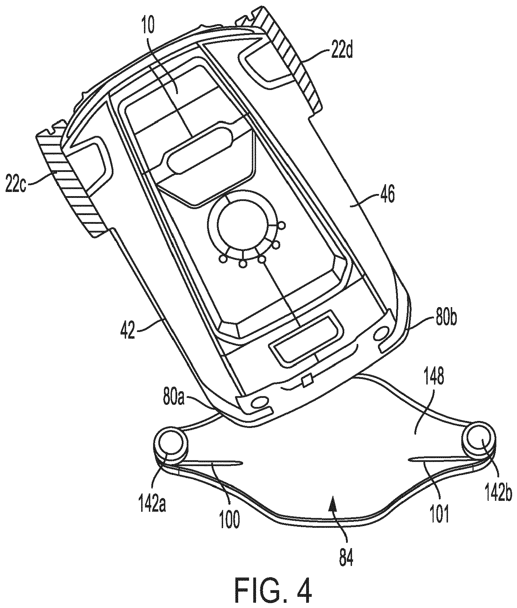

In the illustrated embodiment, the charging plates 80a, 80b are flush with the front end 34 and the sides 42, 46 of the body 18. However, in other embodiments, one or both of the charging plates 80a, 80b may extend outwardly beyond the body 18 to form a raised surface on the front end 34 and/or the sides 42, 46 of the body 18 (see FIG. 4). In still other embodiments, the charging plates 80a, 80b may include a curve or contour to help facilitate interaction with the charging terminals 100, 101. For example, in some embodiments the charging plates 80a, 80b may smoothly transition between the first section 110 and the second section 114 to produce an exterior radius. By doing so, the charging terminals 100, 101 may smoothly travel along the charging plates 80a, 80b while transitioning from contact with the first section 110 to contact with the second section 114. The first charging plate 80a and the second charging plate 80b may be identical in shape and size, or the charging plates 80a, 80b could differ in shape and size (discussed below). The pair of charging plates 80a, 80b are positioned at a constant vertical charger height 126.

The pair of charging plates 80a, 80b are each made from a conductive material, such as metal. As such, the first charging plate 80a forms a first or positive electrode 92 while the second charging plate 80b forms a second or ground electrode 96. However, the polarities may be reversed in some embodiments. For safety, there is a space between the first charging plate 80a and the second charging plate 80b. The space between the first charging plate 80a and the second charging plate 80b may be made of an insulating material.

In one alternative embodiment, the second charging plate 1080b is configured to engage with the charging station 84 before the first charging plate 1080a (see FIG. 6). By doing so, the ground electrode 96 may come into contact with the charging station 84 before the positive electrode 92. This orientation increases safety as it causes the tool 10 to become grounded (i.e., via the ground electrode 96) before the positive electrode 92 is electrically coupled during the docking process. More specifically, in the illustrated embodiment the second charging plate 1080b includes both a first and second section 110, 114 while the first charging plate 1080a only includes a second section 114. In such an embodiment, a tool traveling in a forward direction V would cause the second charging plate 1080b to make an electrical connection with the charging station 84 before the first charging plate 1080a as the second charging plate 1080b is positioned further forward in the direction of travel V and closer to the first end 34.

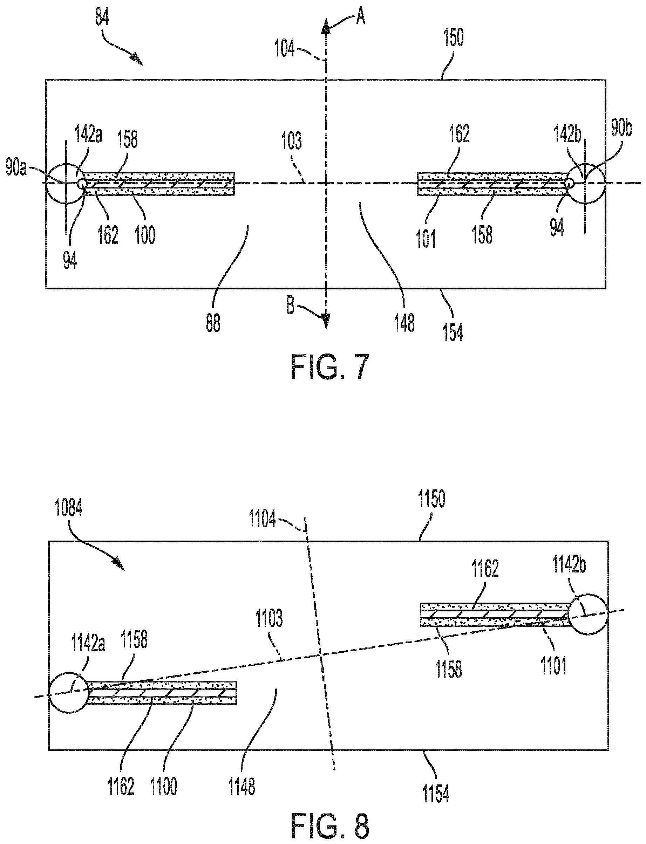

FIG. 7 illustrates a charging station 84 for use with the tool 10. More specifically, the charging station 84 is configured to provide an electrical interface against which the pair of charging plates 80a, b of the tool 10 can interact to form an electrical connection therebetween. The charging station 84 includes a support pad 148, a pair of support columns 142a, 142b, a station controller 146, and a pair of charging terminals 100, 101.

The support pad 148 of the charging station 84 is configured to be positioned on the support surface 60 and forms a top surface 88 that is configured to allow the tool 10 to travel thereon. The support pad 148 defines a charging station axis 103 passing through both the first and second support columns 142a, 142b (described below) and a centerline axis 104 extending perpendicular to the charging station axis 103 and centered between the first and second support columns 142a, 142b. The centerline axis 104, in turn, defines a first direction A and a second direction B. In the illustrated embodiment, the support pad 148 is rectangular in shape having a first end 150 and a second end 154 opposite the first end 150. As shown in FIG. 7, the charging station axis 103 is parallel to both the first and second ends 150, 154 while the centerline axis 104 passes through both the first and second ends 150, 154.

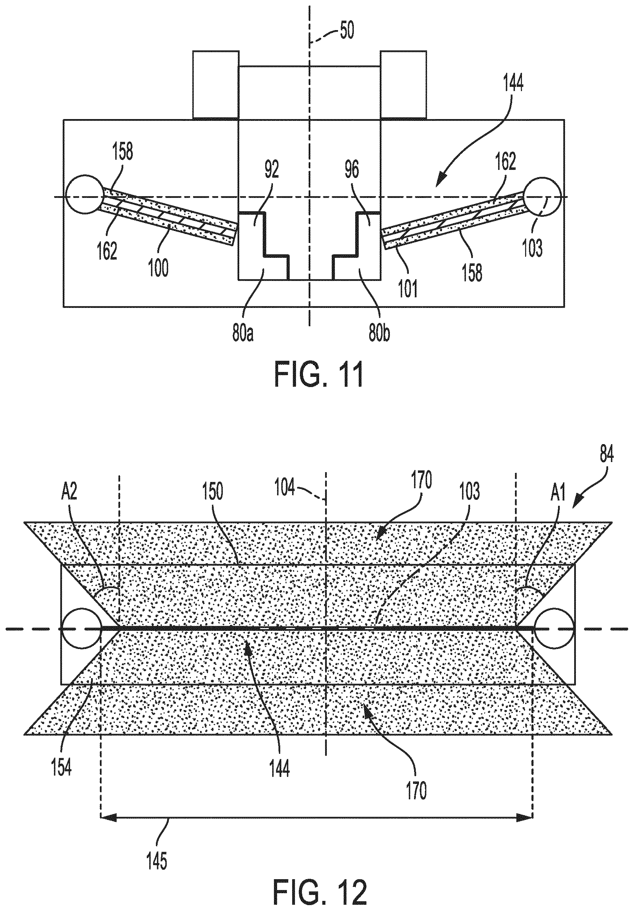

The support pad 148 is sized to at least partially support the tool 10 on the top surface 88 thereof. More specifically, the width of the support pad 148 is sized so that front end 34 of the body 18 of the tool 10 can be positioned on the support pad 148 such that both front wheels 22a, 22b can rest thereon simultaneously (see FIG. 11). The length of the support pad 148 can be sized to the length of the body 18 of the tool 10, or it may be shorter than the length of the body 18, so it only partially supports a portion of the tool 10 (e.g., only the front wheels 22a, 22b). While the illustrated support pad 148 is rectangular, it is understood that in alternative embodiments different sizes and shapes may be present such as but not limited to circular, elliptical, polygonal, and the like. Additionally, the support pad may be made out of a variety of materials (e.g., rubber, hard plastic) so that the charging station 84 can be used on multiple terrains such as soft soils or hard concrete.

The pair of support columns 142a, 142b of the charging station 84 are each mounted to the support pad 148 and extend vertically upwardly from the top surfaced 88 to define a gate 144 having a gate width 145 therebetween. Each support column 142a, 142b also defines a corresponding support column axis 90a, 90b. During use, each support column 142a, b is configured to pivotably support a respective one of the charging terminals 100, 101 thereon. More specifically, a first charging terminal 100 is pivotably mounted on the first support column 142a, and a second charging terminal 101 is pivotably mounted on the second support column 142b. The pair of support columns 142a, 142b are spaced apart so that the tool 10 can pass between the pair of support columns 142a, 142b (e.g., though the gate 144). In the illustrated embodiment, the support columns 142a, 142b are cylindrical, however they can be a variety of shapes (e.g., rectangular cube, triangular prism, and the like). The support columns 142a, 142b are equidistant from the charging centerline 104.

In the illustrated embodiment, the pair of support columns 142a, 142b are secured on the support pad 148; however, in alternative embodiments the pair of support columns 142a, 142b may be removably mounted on the support pad 148. In still other embodiments, the support columns 142a, 142b may be directly placed on the support surface 60 individually with no support pad 148 being present.

The first and second charging terminals 100, 101 of the charging station 84 are pivotably coupled to the first and second support columns 142a, 142b, respectively, for rotational movement about the corresponding column axes 90a, 90b. The charging terminals 100, 101 each include at least one of a positive or ground electrode 158, 162 in electrical communication with the station controller 146. During use, the first and second charging terminals 100, 101 are configured so that as the tool 10 passes between the first and second support columns 142a, 142b (e.g., the tool 10 crosses the support column axis 103), the electrodes 158, 162 of the charging terminals 100, 101 engage and form an electrical connection with the corresponding electrodes 92, 96 formed by the pair of charging plates 80a, 80b of the tool 10.

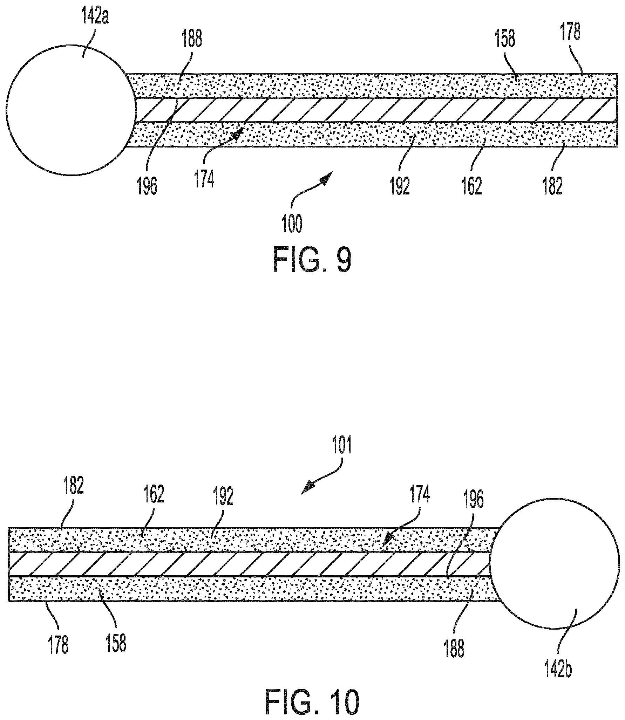

As shown in FIGS. 7, 9 and 10, the first and second charging terminals 100, 101 each have a rectangular shaped body 174 that is generally oriented parallel to the corresponding column axes 90a, 90b in the vertical direction and radially oriented in the horizontal direction. The body 174, in turn, includes a first surface 178 and a second surface 182 opposite of the first surface 178. In the illustrated embodiment, the body 174 is formed with three horizontally stacked sections. A first section 188 is formed from an electrically conductive material (e.g., metal) and forms the first surface 178, a second section 192 is formed from an electrically conductive material (e.g., metal) and forms the second surface 182, and a third or insulating section 196 is positioned between and electrically isolating the first section 188 and the second section 192. As shown in FIGS. 9 and 10, the first section 188 of each charging terminal 100, 101 forms the positive electrode 158, while the second section 192 of each charging terminal 100, 101 forms the ground electrode 162.

As shown in FIG. 7, the two charging terminals 100, 101 are mounted to their respective support columns 142a, 142b in a mirrored configuration so that one positive electrode 158 and one ground electrode 162 (e.g., an electrical pair) are presented in both the first and second directions A, B. More specifically, the first surface 178 of the first charging terminal 100 faces the front end 150 of the support pad 148 (e.g., the first direction A) and the second surface 182 of the first charging terminal 100 faces the second end 154 of the support pad 148 (e.g., the second direction B), while the first surface 178 of the second charging terminal 101 faces the second end 154 of the support pad 148 (e.g., the second direction B) and the second surface 182 of the second charging terminal 101 faces the first end 150 (e.g., the first direction A). Therefore, the positive electrode 158 of the first charging terminal 100 and the ground electrode 162 of the second charging terminal 101 face the first end 150 of the support pad 148, while the ground electrode 162 of the first charging terminal 100 and the positive electrode 158 of the second charging terminal 101 face the second end 154 of the support pad 148.

The charging terminal 84 also includes a pair of biasing members 94. Each biasing member 94 extends between and is coupled to one of the charging terminals 100, 101, and the corresponding one of the support columns 142a, 142b. More specifically, each biasing member 94 is configured to bias the corresponding charging terminals 100, 101 into a rest or neutral position (see FIG. 7). During use, any forces applied to the charging terminals 100, 101 cause the terminals 100, 101 to pivot away from the rest position while removing the force allows the biasing member 94 to bias the terminals 100, 101 back into the rest position. In the illustrated embodiment, the rest position for both the first and second charging terminals 100, 101 is where each terminal 100, 101 extends outwardly from its respective support column 142a, 142b along the charging station axis 103 towards the charging centerline 104 (see FIG. 7).

Together, the two charging terminals 100, 101 act as a gate being positioned between the two support columns 142a, 142b along the station axis 103. The length of the charging terminals 100, 101 are sized such that both of the charging terminals 100, 101 can make contact with the tool 10 when the tool 10 is positioned between the support columns 142a, 142b, but sized so that the charging terminals 100, 101 do not make contact with each other. The first and second charging terminals 100, 101 are configured to independently pivot in both a clockwise and a counterclockwise direction about the support columns 142a, 142b upon the application of an external force (e.g., coming into contact with the body 18 of the tool 10).

Through the above described layout, the charging terminals 100, 101 are configured so that as long as both the charging terminals 100, 101 make contact with a corresponding one of the pair of charging plates 80a, b, at any point along the length of the charging plates 80a, b, the desired electrical connections will be made (e.g., the positive electrode 92 of the charging plate 80a is in direct surface contact with the positive electrode 158 of the first or second charging terminal 100, 101 and the ground electrode 96 of the charging plate 80b is in direct surface contact with the ground electrode 162 of the first or second charging terminal 100, 101).

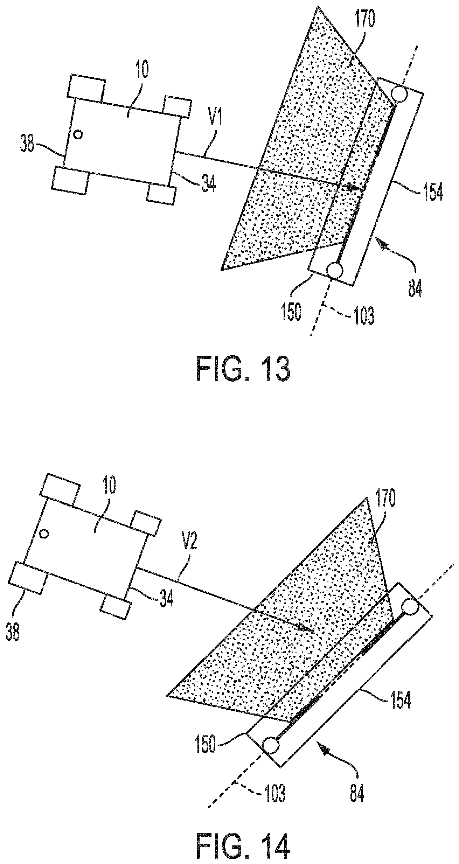

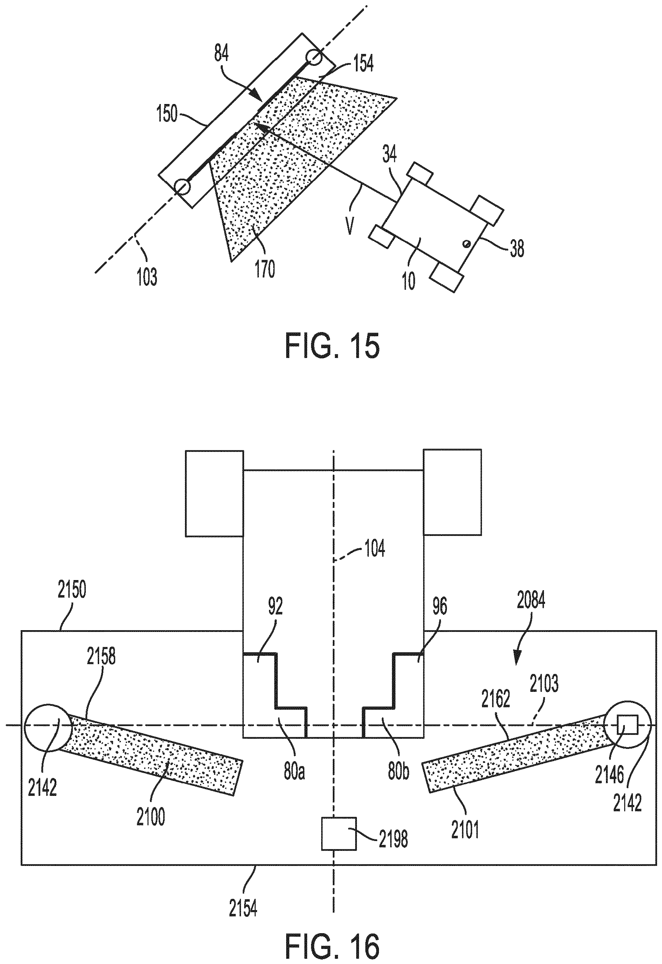

Since the illustrated charging station 84 includes terminals 100, 101 where each terminal 100, 101 includes both a positive and a ground electrode 158, 162 on opposite sides thereof, it allows the tool 10 to access the charging station from either the first end 150 (see FIG. 13) or the second end 154 (see FIG. 15). More specifically, a tool 10 approaching the station 84 from the first direction A will be approaching a station 84 having a positive electrode 158 on the right side and a ground electrode 162 on the left side and a tool 10 approaching the station 84 from the second direction B will also be approaching a station 84 having a positive electrode 158 on the right side and a ground electrode 162 on the left side.

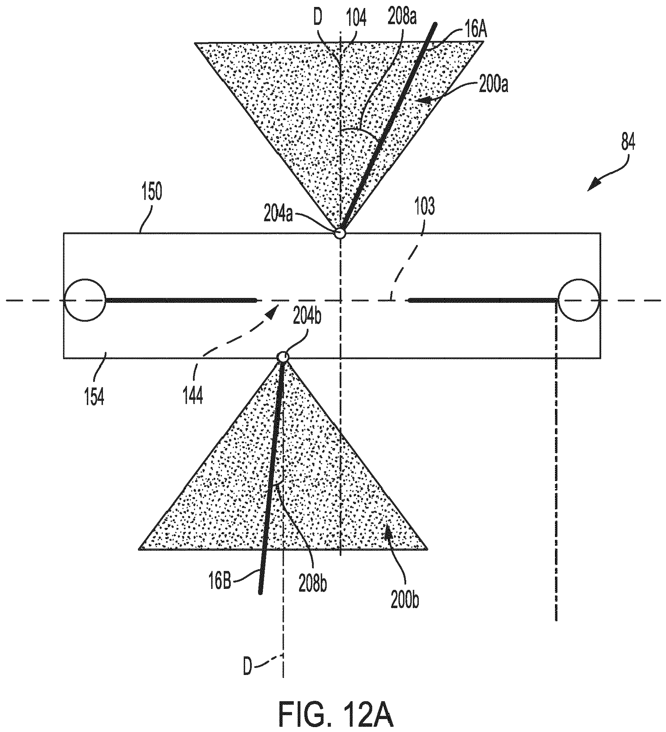

Additionally, since the charging terminals 100, 101 can pivot it allows the tool 10 to enter from a variety of angles relative to the centerline 104 and still produce the required electrical contacts. More specifically, the charging station 84 is shaped so that the tool 10 may approach the station 84 from the first end 150 or the second end 154 along any approach vector V1 positioned within a pre-determined approach envelope 170, shown in FIG. 12. The approach envelope 170 is generally defined as the range of approach angles, as measured from the charging centerline 104, at which the tool 10 can approach the station 84 and still make the desired electrical contacts. More specifically, the approach envelope 170 generally includes a trapezoidal or frusto-conical region with its base resting along the charging station axis 103 within the gate 144 (e.g., within the gate width 145) and expanding outwardly at an expansion angle A1, A2 on both sides thereof relative to the centerline 104. In the illustrated embodiment, the expansion angle A1, A2 is at least 89 degrees. In other embodiments, the expansion angle A is at least 85 degrees, 80 degrees, 75 degrees, 70 degrees, 65 degrees, 60 degrees, 55 degrees, 50 degrees, and 45 degrees. Furthermore, while both expansion angles A1, A2 are the same in the illustrated embodiment, it is understood that in other embodiments the different expansion angles A1, A2 may be different. In such embodiments, the difference in angle A1, A2 may accommodate differences in terminal 100, 101 shape, differences in the layout of the charging plates 80a, 80 of the tool 10, and the like.

For example, in some embodiments such approach vectors V1 may include vectors traveling toward the center point of the gate 144 between the charging terminals 100, 101 from any direction within the approach envelope 170 (see FIG. 13). In other embodiments, such approach vectors V2 may include vectors offset from the center point of the gap between the charging terminals 100, 101 but still falling within the approach envelope 170 and still passing between support columns 142a, 142b (see FIG. 14).

The pivoting action of the terminals 100, 101 also allows a single terminal 84 to accommodate a variety of tools (not shown) having different widths and/or plate 80 layouts without having to alter or otherwise swap out the terminals 100, 101 themselves.

In embodiments where the boundary wire 16 passes through or otherwise is attached to the charging station 84, the charging station 84 may also define one or more boundary wire envelopes 200a, 200b. A boundary wire envelope 200a, 200b is generally defined as the range of extension angles, as measured relative to the centerline 104, at which the boundary wire 16 may extend from the support pad 148 and still allow a tool 10 following the wire 16 to pass through the gate 144. More specifically, each envelope 200a, 200b corresponds to a respective wire segment 16a, 16b that extends from the support pad 148 at a given extension point 204a, 204b.

As shown in FIG. 12A, charging station 84 includes a first wire segment 16a extending outwardly from the first end 150 of the support pad 148 at the first extension point 204a to define a first extension angle 208a and a second wire segment 16b extending outwardly from the second end 154 of the support pad 148 at the second extension point 204b.

In the illustrated embodiment, the first bound wire envelope 200a extends ±89 degrees from the first extension point 204a relative to a datum D that is parallel to the centerline axis 104. However, in other embodiments, the first boundary wire envelope 200a may extend at least 85 degrees, 80 degrees, 75 degrees, 70 degrees, 65 degrees, 60 degrees, 55 degrees, 50 degrees, and 45 degrees. Furthermore, while the illustrated embodiment extends equally in both directions relative to a datum D parallel to the centerline axis 104, it is understood that in other embodiments the envelope 200a may extend asymmetrically relative to the centerline axis 104.

Furthermore, the second bound wire envelope 200b extends ±89 degrees from the second extension point 204b relative to a datum D that is parallel to the centerline axis 104. However, in other embodiments, the second boundary wire envelope 200b may extend at least 85 degrees, 80 degrees, 75 degrees, 70 degrees, 65 degrees, 60 degrees, 55 degrees, 50 degrees, and 45 degrees. Furthermore, while the illustrated embodiment extends equally in both directions relative to a datum parallel to the centerline axis 104, it is understood that in other embodiments the envelope 200b may extend asymmetrically relative to the centerline axis 104.

The station controller 146 of the charging station 84 is in operable communication with at least the positive electrode 158 and the ground electrode 162 of the first and second charging terminal 100, 101 and is configured to control the flow of electrical power thereto. More specifically, the charging station 84 is in electrical communication with a power source (e.g., an internal or external battery, and/or utility power via a plug, and the like) and is configured to convey electrical power to the electrodes 158, 162 during the battery charging operation. While not shown, the first and second charging terminal 100, 101 may include additional electrodes electrically isolated from the positive and ground electrodes 158, 162 and configured to transmit additional electrical power and/or signals between charging station 84 and the tool 10.

During use, the tool 10 is configured to travel across the support surface 60 and cut vegetation (e.g., grass). When the cutting operation is complete and/or the battery 32 drops below a pre-determined charge level, the controller 30 of the tool 10 may instruct the tool 10 to return to the charging station 84 to replenish the battery 32. The tool 10 may then maneuver toward the charging station 84 taking any approach vector V that falls within the approach envelope 170 (see FIG. 12).

As the tool 10 approaches the station 84 along the approach vector V, the tool 10 climbs onto the top surface 88 of the support pad 148 and begins to travel across the top surface 88 toward the axis 103.

Upon reaching the axis 103, the first and second plates 80a, 80b come into contact with the positive electrode 158 of the first terminal 100 and the ground electrode 162 of the second terminal 101, respectively, forming an electrical connection therebetween. The tool 10 may continue to travel in direction V pivoting the terminals 100, 101 out of their rest positions to make room for the tool 10 to pass therethrough. Simultaneously, the biasing members 94 attempt to bias the terminals 100, 101 back into their rest position resulting in a compressive force maintaining the terminal 100, 101 in contact with the plates 80a, 80b.

After both connections are made, the tool 10 comes to a stop and the station controller 146 can begin the charging process (e.g., conveying electrical power to the battery 32 of the tool 10 via the electrodes 92, 96, 158, 162). When the charging process is complete, the controller 30 of the tool 10 may instruct the tool 10 to travel away from the charging station 84 so that the first and second charging terminals 100, 101 separates from the charging plates 80 and the electrical connections between the electrodes 92, 96, 158, 162 severed. With the tool 10 disengaged, the biasing members 84 return both charging terminals 100, 101 to their rest positions.

In the illustrated embodiments, the controller 30 of the tool 10 may include a program that instructs the tool 10 to approach the charging station 84 from a variety of approach vectors within the approach envelope 170 on subsequent trips to the charging station 84. By doing so, the program allows the tool 10 to minimize the amount of damage done to the turf immediately surrounding the charging station 84 by assuring that no single area of turf is subject to excessive wear. In some embodiments, the approach vectors may be randomly selected from a group of pre-calculated vectors. However, in alternative embodiments, the varied approach vectors may be pre-determined or produce a recurring pattern. For example, if the tool 10 approached the station 84 from the 12 o'clock position for the most recent charging session, the controller 30 may be configured to instruct the tool 10 to approach the station 84 from the 2 o'clock position for the subsequent charging session. Such a program may also then instruct the tool 10 to approach the station 84 from the 5 o'clock position for the next charging session, and so on continuing to adjust the vector 45 degrees while staying in the approach envelope 170 for every charging session.

FIG. 8 illustrates another embodiment of the charging station 1084. The charging station 1084 is substantially similar to the charging station 84 described above. As such, only the differences will be described in detail herein. The terminals 1100, 1101 are positions so that their rest positions are angularly offset from the axis 1103 so that the ground terminal 1162 is positioned forward of the axis 1103 and the positive terminals 1158 are positioned behind the axis 1103. By doing so, the terminals 1100, 1101 are oriented so that a tool 10 will engage the ground terminal 1162 before the positive terminal 1158. This makes the charging station 1084 safer as it makes sure to ground the tool 10 before the positive electrode 1158 is engaged. As shown in FIG. 8, this layout assures the ground electrode 1162 will contact first regardless of the direction that the tool 10 approaches (e.g., from the first direction A or the second direction B).

FIG. 16 illustrates another embodiment of the charging station 2084. The charging station 2084 is substantially similar to the charging station 84 described above, so only the differences will be described in detail herein. The charging station 2084 includes sensor 2198 disposed inside of the support pad 2148. The sensor 2198 may be placed proximate the first end 2150 or the second end 2154 of the charging station 2084, or the sensor 2198 might extend between the first end 2150 and the second end 2154. The sensor 2198 is configured to determine if the tool 10 is accessing the charging station 2084 from a first end 2150 or a second end 2154. The sensor 2198 may be a weight or a proximity sensor. The sensor 2198 is in communication with the controller 2146.

The charging terminals 2100, 2101 are formed from a single layer made from a conductive material, such as metal. The controller 2146 controls and changes the polarity of the charging terminals 2100, 2101 so that the terminals 2100, 2101 always have opposite charges (e.g., the first charging terminal 2100 has a positive electrode 2158 and the second charging terminal 2101 has a ground electrode 2162). The controller 2146 changes the polarity of the charging terminals 2100, 2101 stations based on the information from the sensor 2198 to ensure that the positive electrode 92 connects with the positive electrode 2158 and that the ground electrode 96 connects with the ground electrode 2162.

If the sensor 2198 senses that the tool 10 is approaching the charging station 2084 from the first end 2150, the controller 2146 outputs signals so that the first charging terminal 2100 forms a positive terminal 2158 and the second charging terminal 2101 forms a ground terminal 2162. Alternatively, if the sensor 2198 senses that the tool 10 is approaching the charging station 2084 from the second end 2154, the controller 2146 outputs signals so that the second charging terminal 2101 forms a positive electrode 2158 and the first charging terminal 1100 forms the ground electrode 2162.

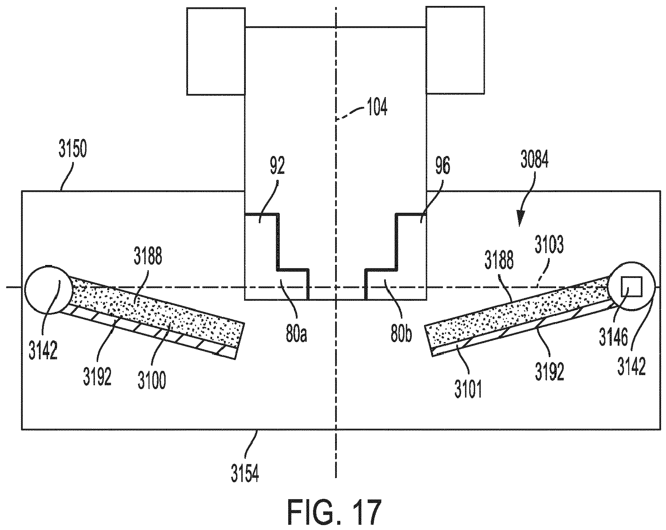

FIG. 17 illustrates another embodiment of the charging station 3084. The charging station 3084 is substantially similar to the charging station 84 described above, so only the differences will be described in detail herein. The charging terminals 3100, 3101 are formed from two horizontally stacked sections. A first section 3188 is formed form an electrically conductive material (e.g., metal) and a second section 3192 is formed from an electrically insulating material (e.g., rubber and the like).

As shown in FIG. 17, the conductive section 3188 of the first terminal 3100 and the conductive section 3188 of the second terminal 3101 both face the same side (e.g., the first side 3150) of the support pad 3148. More specifically, one of the conductive section 3188 of the first terminal 3100 and conductive section 3188 of the second terminal 3101 serves as the positive electrode 3158 while the remaining conductive section 3188 serves as the ground or negative electrode 3162. As a result of this layout, a tool 10 approaching the terminal 3084 from the first end 3150 will be presented with a positive and ground electrode 3158, 3162 for forming the electrical connection. In contrast, a tool 10 or other item approaching from the second end 3158 will be presented with two insulative surfaces unable to conduct electricity therewith. As such, the layout of the terminal 3084 is uni-directional in the sense that it can only accommodate a tool 10 approaching from a single direction. However, the terminal 3084 also has a greater safety factor as the sides of the terminals 3100, 3101 facing the second end 3154 are insulated and therefore will not conduct electricity if accidentally touched or brushed against by a user, wildlife, and the like.

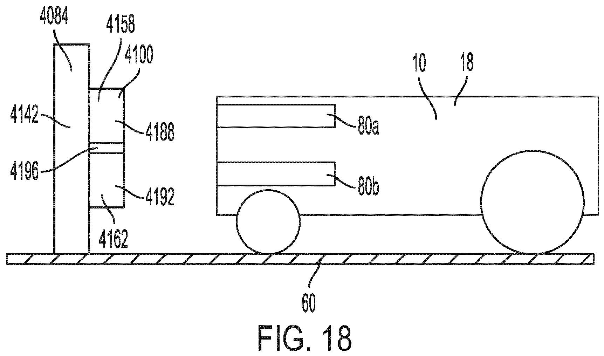

FIG. 18 illustrates another embodiment of the charging station 4084. The charging station 4084 is substantially similar to the charging station 84 so only the differences will be discussed in detail herein. The charging station 4084 includes a single terminal 4100 coupled to a single support column 4142. The terminal 4100, in turn, includes three vertically stacked sections. A first section 4188 is formed from an electrically conductive material (e.g., metal), a second section 4192 is formed from an electrically conductive material (e.g., metal), and a third or insulating section 4196 positioned between and electrically isolating the first section 4188 and the second section 4192. In the illustrated embodiment, the first section 4188 forms the positive electrode 4158 while the second section 4192 forms the ground or negative electrode 4162. However, in alternative embodiments, the opposite may be true.

As shown in FIG. 18, the terminal 4100 is configured so that the first section 4188 is positioned at a first vertical height that substantially corresponds with the vertical height of the positive charging plate 80a of the tool 10 while the second section 4192 is positioned at a second vertical height different than the first vertical height that substantially corresponds with the vertical height of the negative charging plate 80b of the tool 10. As such, an electrical connection may be made between the tool 10 and the charging station 4084 using only a single terminal 4100. In other embodiments, additional sections may also be present to allow for more electrical connections to be made.

## Claims

1. A charging station for use with a robotic tool, the charging station comprising:
a first column defining a first column axis;
a second column defining a second column axis;
a first charging terminal pivotably coupled to the first column for rotation about the first column axis, wherein the first charging terminal includes at least one electrode; and
a second charging terminal pivotably coupled to the second column for rotation about the second column axis, wherein the second charging terminal includes at least one electrode.

2. The charging station of claim 1, wherein at least one of the first charging terminal and the second charging terminal includes a plurality of horizontally stacked portions.

3. The charging station of claim 2, wherein at least one of the first charging terminal and the second charging terminal includes a first portion forming a first surface, a second portion forming a second surface opposite the first surface, and a third portion positioned between the first portion and the second portion.

4. The charging station of claim 3, wherein the first portion and the second portion are formed from a conductive material, and wherein the third portion is formed from an insulating material.

5. The charging station of claim 3, wherein one of the first surface and the second surface forms a positive electrode and the other of the first surface and the second surface forms a ground electrode.

6. The charging station of claim 1, wherein the at least one electrode of the first charging terminal has an opposite polarity of the at least one electrode of the second charging terminal.

7. The charging station of claim 1, further comprising a controller, wherein the controller can change the polarity of the at least one electrode of the first charging terminal and the at least one electrode of the second charging terminal.

8. The charging station of claim 7, wherein the robotic tool can access the charging station from a first direction and a second direction opposite of the first direction, wherein the controller changes the polarity based on whether the robotic tool accesses the charging station from the first direction or the second direction.

9. A robotic tool comprising:
a body having an outer surface, the body having a front end, a first side end extending from the front end, and a second side end extending from the front end opposite the first side end;
one or more driven wheels coupled to the body;
a working tool coupled to the body;
a battery; and
a positive charging plate including:
a first portion extending partially along the front end of the body,
a second portion extending at least partially along the first side of the body, and
a ground charging plate including:
a third portion extending partially along the front end of the body, and
a fourth portion extending at least partially along the second side of the body.

10. The robotic tool of claim 9, wherein the positive charging plate and the ground charging plate are substantially identical in size and shape.

11. The robotic tool of claim 9, wherein the second portion of the positive charging plate has a greater surface area than the first portion of the positive charging plate.

12. The robotic tool of claim 9, wherein the fourth portion of the ground charging plate has a greater surface area than the third portion of the ground charging plate.

13. The robotic tool of claim 9, wherein the ground charging plate has a greater total surface area than the total surface area of the positive charging plate.

14. The robotic tool of claim 9, wherein the working tool is a rotating blade.

15. A robotic tool kit, comprising:
a charging station including:
a first column defining a first column axis, and
a first charging terminal pivotally coupled to the first column for rotation about the first column axis, wherein the first charging terminal extends radially outwardly from the first column to produce at least one electrode; and
a robotic tool comprising:
a body having an exterior surface;
at least one driven wheel coupled to the body,
a battery, and
a first charging plate open to the exterior surface of the body, wherein the first charging plate is configured to contact and form an electrical connection with the at least one electrode.

16. The robotic tool kit of claim 15, wherein the at least one electrode of the charging terminal is located over a first vertical height range from a support surface, and wherein the first charging plate is located over a second vertical height range from the support surface, and wherein the first vertical height range overlaps with the second vertical height range.

17. The robotic tool kit of claim 15, wherein the charging terminal includes a front surface and a back surface, and wherein one of the front surface and the back surface forms the positive electrode and the other of the back surface and the front surface forms the ground electrode.

18. The robotic tool kit of claim 17, further comprising:
a second charging plate coupled and open to the exterior surface of the body;
a second column defining a second column axis;
a second charging terminal pivotably coupled to the second column for rotation about the second column axis, wherein the second charging terminal extends radially outwardly from the second column to produce at least one electrode.

19. The robotic tool kit of claim 18, wherein the first charging terminal and the second charging terminal are positioned a first distance from a support surface, wherein the first charging plate and the second charging plate are positioned a second distance from the support surface, and wherein the first distance is the same as the second distance.

20. The robotic tool kit of claim 15, wherein the charging terminal can rotate about the first column axis in a first direction and a second direction.
